# EUROPEAN PATENT SPECIFICATION

(11) **EP 2 629 562 B1**
(45) Date of publication and mention of the grant of the patent: **23.01.2019**
(21) Application number: 11832626.3
(22) Date of filing: 14.10.2011
(51) Int. Cl.: H04W 16/18, H04W 16/16, H04W 88/18, H04W 24/02, H04W 16/32, H04W 84/04

(54) **MANAGEMENT SYSTEM, METHOD, AND DEVICE FOR MOBILE COMMUNICATION SYSTEM**
MANAGEMENTSYSTEM, -VERFAHREN UND -VORRICHTUNG FÜR EIN MOBILKOMMUNIKATIONSSYSTEM
SYSTÈME, PROCÉDÉ ET DISPOSITIF DE GESTION POUR SYSTÈME DE COMMUNICATION MOBILE

(30) Priority: 14.10.2010 JP 2010231292
(43) Date of publication of application: 21.08.2013
(73) Proprietor: NEC Corporation, Tokyo 108-8001 (JP)
(72) Inventor: HARA, Yutaka, Tokyo 108-0073 (JP); OHASHI, Kazunori, Tokyo 108-8001 (JP); KOJIMA, Masahiko, Tokyo 108-8001 (JP)
(74) Representative: MacDougall, Alan John Shaw
(86) International application number: PCT/JP2011/073696
(87) International publication number: WO 2012/050197

(56) References cited:
- JP-A- 2009 302 977
- US-A1- 2010 216 486
- ERICSSON ET AL: "Discussion on architecture for MDT", 3GPP DRAFT; R2-096736 MDT ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050391213, [retrieved on 2009-11-03]
- IP ACCESS LTD ET AL: "TR32.821 OAM Requirements", 3GPP DRAFT; S5-081546, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Dalian, China; 20081004, 4 October 2008 (2008-10-04), XP050335657, [retrieved on 2008-10-04]
- FUJITSU: 'Macro UE initiated eICIC through CSG femto eNB' 3GPP TSG-RAN1 #62, R1-104883 23 August 2010 - 27 August 2010, pages 1 - 3, XP050450169
- NGMN ALLIANCE NGMN TOP OPE RECOMMENDATIONS VERSION 1.0 September 2010, pages 25 - 26, XP008170798

## Description

### TECHNICAL FIELD

The present invention relates to a technique for managing a mobile communication system. For example, it relates to a system, a method, and apparatuses suitably applicable to installation and management of stations in a system in which macrocell and femtocell base stations coexist.

### BACKGROUND

Regarding an LTE (Long Term Evolution) system, which is a 3.9-generation mobile communication system developed by the 3GPP (3rd Generation Partnership Project), a standardization organization NGMN (next generation mobile networks) proposes automation of an installation design of base station, in order to reduce CAPEX (Capital Expenditure) relating to equipment investment by network operators.

In reducing the CAPEX, the price of an LTE base station eNB (evolved NodeB) is important. In addition, in the installation design of an eNB, coverage and accommodation service capabilities of the eNB are material.

In the installation design of an eNB, normally, map information and cost information to be used for the design are supplied from a planning tool to a SON (Self Organizing Networks) server. Regarding LTE, from a viewpoint of the reduction of OPEX (Operation Expenditure) and the like, SON is under consideration. The SON server includes functions such as for self-configuration, self-optimization, and self-healing and automatically changes, sets, and optimizes coverage (cell size), capacity, interference, cell topology, frequency allocation, and bandwidth, for example. The SON server optimizes radio parameters such as transmission power, antenna tilt angle, and handover parameters of an eNB, for example. The SON server changes these radio parameters on an as-needed basis. For example, regarding the SON server, reference can be done to Non Patent Literatures (NPLs) 1 to 4.

To cover a radio wave blind zone (a coverage hole) such as an indoor location or a high rise building (condominium), an indoor base station (home base station) HeNB (Home eNodeB) is installed.

Aside from installation design of an eNB, an operator installs an indoor base station HeNB, with a complaint received from a customer (a complaint about deterioration of cell reception quality, disconnection of a radio link, or the like) or coping with a coverage hole on the spot as a trigger. Thus, the reason and approach for installation of an indoor base station HeNB are different from those of eNB.

For operators installing such indoor base stations HeNBs, introducing and installing HeNB involves expense, to say nothing of eNB. In addition, in terms of radio, an eNB/HeNB each can be an interference source for the other. Namely, while a femtocell base station (home base station HeNB) can be an interference source for a macrocell base station eNB, the macrocell base station eNB can also be an interference source for the femtocell base station HeNB. Thus, instead of separately manage an eNB and an HeNB, it is desirable to manage the eNB and the HeNB in a unified manner.

US 2010/216486 A1 discloses a communication system which includes different kinds of base stations such as a macro base station and a femto base station. This system may execute a method for controlling unfavorably occurring interference due to such different kinds of base stations. In the method, the femto base station sends a femtocell interference indication (FII) report to the resource allocation control unit when user equipment is connected to the femto base station. The FII report contains a request for the allocation of resources to avoid interference. Then the resource allocation control unit establishes a femto interference coordination (FIC) zone according to the received FII report. The FIC zone indicates a particular region used to define resources allocated to the femto base station. The resource allocation control unit may be the macro base station or a self-organizing network (SON) server.

### [CITATION LIST]

### [Non Patent Literatures]

[NPL 1] Standardization Organization Next generation mobile networks, "NGMN Recommendation on SON and O&M Requirements," December 5, 2008
[NPL 2] Standardization Organization Next generation mobile networks, "NGMN Informative List of SON Use Cases," April 17, 2007
[NPL 3] 3GPP TR 36.902 V9.2.0 (2010-06) Technical Report 3rd Generation Partnership Project; Technical Specification Group Radio Access Network; Evolved Universal Terrestrial Radio Access Network (E-UTRAN); Self-configuring and self-optimizing network (SON) use cases and solutions (Release 9)
[NPL 4] 3GPP TS 32.500 V10.1.0 (2010-09) Technical Specification 3rd Generation Partnership Project; Technical Specification Group Services and System Aspects; Telecommunication Management; Self-Organizing Networks (SON); Concepts and requirements (Release 10)
[NPL 5] Standardization Organization W3C, SOAP v1.2 Part0: Primer, April 27, 2007
[NPL 6] Standardization Organization Broadband Forum TR-069 <URL: http://www.broadband-forum.org/>

### SUMMARY

The following describes the analysis of related techniques.

A problematic point that needs to be taken into account to achieve unified management of a base station eNB and an indoor base station HeNB that coexist with each other is the difference in purposes for which these base stations are used.

For example, a customer or an underground shop uses an indoor base station HeNB, indoors. An end user (customer) of an operator can directly observe the operating status of the indoor base station HeNB. In addition, while the number of installed eNBs is on the order of tens of thousands, the number of installed HeNBs is on the order of millions, for example. Namely, the number of HeNBs is greater than that of eNBs by double digits.

In addition to the difference in the installation number, HeNBs are used more personally. Thus, the business model of HeNBs can differ from that of eNBs. For example, in one model, fees can directly be collected from a customer using an HeNB. In another model, an HeNB specially designed for a high-speed data communication service can be installed.

As described above, since HeNBs can directly be observed by customers, poor usability of HeNBs directly leads to lowering of customer satisfaction.

In contrast, an eNB is installed in view of the public interest, and a single eNB collectively processes mobile phone services of many customers. Namely, customers are not directly conscious of installation of an eNB. Thus, for example, an eNB can be installed or radio parameter settings can be changed based on the intention or judgment of the operator (for example, to achieve optimization about coverage or interference avoidance), irrespective of specified customers.

However, since both an HeNB and an eNB are components in the LTE system, there is no difference therebetween in terms of radio.

In the installation design of an eNB, from a viewpoint of coverage improvement (coverage optimization), information about HeNBs being present as spots is needed. In addition, from a viewpoint of radio interference (optimization of interference avoidance), the location information of HeNB is needed.

Conversely, the radio environment of an eNB exerts influence on an HeNB. Manually (by hand) managing information about HeNBs whose installation number can reach up to several millions and coordinating the information with a SON server executing eNB planning, place a large burden on operators in the form of CAPEX. Depending on the installation number of HeNBs, management operation for HeNBs is beyond being practical.

Thus, the present invention has been made to solve the above problems. An object of the present invention is to provide a system, a method, and apparatuses for facilitating cooperation and efficiency of management of a macrocell base station and a home (indoor) base station.

The invention is set out in the appended set of claims. The embodiments, examples and/or aspects of the following description which are not covered by the appended claims are considered as not being part of the present invention.

According to the present invention, there is provided a management system for a mobile communication system, wherein the management system comprises:
a first server that is configured to manage a macrocell base station of the mobile communication system, and perform installation design and radio parameter setting of the macrocell base station;
a customer management system that is configured to store and manage customer information and that is configured to store and manage information on a femtocell/home base station of the mobile communication system in association with the customer information; and
a communication protocol interface that is configured to interconnect the first server and the customer management system,
wherein the first server is configured to, in performing installation design and/or radio parameter setting of the macrocell base station, acquires information about the femtocell/home base station located in correspondence with where the macrocell base station is to be installed and the customer information associated with the femtocell/home base station from the customer management system to determine whether correction of installation and/or radio parameter setting of the macrocell base station is needed or not.

According to another aspect of the present invention, there is provided a management method for a mobile communication system, wherein the method comprises:
interconnecting
a first server that manages a macrocell base station of the mobile communication system, and that performs installation design and radio parameter setting of the macrocell base station, and
a customer management system that stores and manages customer information and that stores and manages information on a femtocell/home base station of the mobile communication system in association with the customer information to allow the first server and the customer management system to cooperate each other; and
the first server, in performing installation design and/or radio parameter setting of the macrocell base station, acquiring information about the femtocell/home base station located in correspondence with where the macrocell base station is to be installed and the customer information associated with the femtocell/home base station, from the customer management system to determine whether correction of installation and/or radio parameter setting of the macrocell base station is needed or not.

According to another aspect of the present invention, there is provided a server apparatus that manages a macrocell base station of a mobile communication system and that performs installation design and radio parameter setting of the macrocell base station, wherein the server apparatus is connected for communication to a customer management system that stores and manages customer information and that stores and manages information on a femtocell/home base station of the mobile communication system in association with the customer information, and to a second server apparatus that maintains the femtocell/home base station, via a predetermined communication protocol interface,
wherein, in performing installation design and/or radio parameter setting of the macrocell base station, the server apparatus acquires information about the femtocell/home base station located in correspondence with where the macrocell base station is to be installed and the customer information associated with the femtocell/home base station, from the customer management system to determine whether correction of installation and/or radio parameter setting of the macrocell base station is needed or not, and
wherein, when the femtocell/home base station is installed/removed or radio parameter setting of the femtocell/home base station is changed, the server apparatus receives information about the femtocell/home base station from the customer management system,
in accordance with an influence on the femtocell/home base station by the macrocell base station already installed corresponding to where the femtocell/home base station is installed, the server apparatus determines whether correction of installation and/or radio parameter setting of the femtocell/home base station is needed or not, notifies the customer management system of whether correction regarding the femtocell/home base station is needed or not, and sends, if the correction is needed, correction value information to the customer management system.

According to another aspect of the present invention, there is provided a server apparatus for a customer management system, wherein the server apparatus is connected to a first server that manages a macrocell base station of a mobile communication system, and performs installation design and radio parameter setting of the macrocell base station, and to a second server that maintains a femtocell/home base station of the mobile communication system via a preset interface,
wherein the server apparatus comprises a storage device that stores and manages customer information and that stores and manages information on the femtocell/home base station of the mobile communication system in association with the customer information;
wherein, when the first server performs installation design and/or radio parameter setting of the macrocell base station, the server apparatus acquires information about the femtocell/home base station located in correspondence with where the macrocell base station is to be installed and the customer information associated with the femtocell/home base station from the storage device and sends the acquired information to the first server,
wherein, when the femtocell/home base station is installed/removed or radio parameter setting of the femtocell/home base station is changed, the server apparatus receives information about the second base station, sends the information to the first server, and causes the first server to determine whether correction of installation and/or radio parameter setting of the macrocell base station is needed or not,
wherein the server apparatus is notified by the first server of whether correction about the femtocell/home base station is needed, the determination being made based on an influence on the femtocell/home base station by the macrocell base station already installed and, if the correction is needed, the server apparatus receives correction value information from the first server, and
wherein, if the correction about the femtocell/home base station is needed, the server apparatus changes information about the femtocell/home base station stored and managed in the storage device, sends correction value information about the femtocell/home base station to the second server, and causes the second server to correct the radio parameter setting of the femtocell/home base station.

According to the present invention, it is possible to facilitate cooperation and efficiency of management of a base station (eNB) and an indoor base station (HeNB).

### BRIEF DESCRIPTION OF THE DRAWINGS

Fig. 1 illustrates a configuration of a system according to an exemplary embodiment of the present invention.
Fig. 2 is a sequence diagram illustrating a procedure for installing an eNB/HeNB according to an exemplary embodiment of the present invention.
Fig. 3 illustrates customer information and HeNB information in a CRM system according to an exemplary embodiment of the present invention.

### MODES

The following describes exemplary embodiments of the present invention. In one of preferred modes of the present invention, the cooperation of customer management of an indoor base station (HeNB) by a customer management system and management of information on a base station (eNB), is implemented to achieve:
- improvement of efficiency in radio parameter setting of eNB/HeNB and improvement of accuracy in the setting; and
- prevention of lowering of customer satisfaction for HeNB.

In one of preferred modes of the present invention, there are provided: a first server (103: SON server) that manages a first base station (eNB) of a mobile communication system (LTE system), performs installation design and radio parameter setting of the first base station (eNB); a customer management system (112: CRM (Customer Relationship Management) system, server) that stores and manages customer information in a storage device (112-2) and stores and manages information on a second base station (HeNB) of the mobile communication system (LTE system) in association with customer information in the storage device (112-2); and a communication protocol interface (121: SOAP interface) that interconnects the first server (103) and the customer management system (112). The first server (103), in the installation and/or the radio parameter setting of the first base station (eNB), acquires information on the second base station (HeNB) corresponding to the installation location of the first base station (eNB) and the customer information associated with the second base station (HeNB) from the customer management system (112) and determines whether or not it is necessary to correct installation and/or the radio parameter setting of the first base station (eNB).

Furthermore, in one of preferred modes of the present invention, there are further provided: a second server (111: TR-069-compliant server) that performs maintenance of the second base station (HeNB); and an interface (121: SOAP interface) for a communication protocol that performs interconnection among the second server (111), the first server (103), and the customer management system (112). When a second base station (HeNB) is installed/removed or a radio parameter setting of the second base station (HeNB) is changed, information about the second base station (HeNB) is supplied from the customer management system (112) to the first server (103). Depending on an influence on the second base station (HeNB) exerted by a first base stations (eNB) corresponding to the installation location of the second base station (HeNB) among a group of first base stations (eNBs) which have been already installed, the first server (103) determines whether or not it is necessary to perform correction to installation and/or radio parameter setting of the second base station, and sends information as to whether or not the correction regarding the second base station is needed, to the customer management system (112) and sends, if the correction is needed, correction value information to the customer management system (112). In a case wherein the correction regarding the second base station (HeNB), which is to be installed or removed or whose radio parameter setting is to be changed, is needed, the customer management system (112) changes information about the second base station stored and managed by the customer management system (112) based on the information that has been sent from the first server (103) and sends correction value information about the second base station to the second server (111). The second server (111) performs correction to the radio parameter setting of the second base station, based on the correction value information.

According to one of modes of the present invention, the customer management system (112: CRM system) performs consolidated management of information about a second base station (HeNB) associated with a customer and necessary information about the second base station (HeNB) automatically is supplied from the first server (SON server). In this way, in the first server (SON server) which can use both map information (for example, the installation location, or cartographic information of a first base station eNB) acquired from a planning tool for planning a mobile communication network (LTE) and customer information associated with the second base station (HeNB), planning and management of design installation and radio parameter setting of the first base station (eNB) can be facilitated.

In addition, according to one of modes of the present invention, with the first server (SON server) and the customer management system (CRM system) being interconnected to cooperate each other, radio network setting operation and management in consideration of customer information can be enabled. For example, by taking characteristics such as past complaints per customer managed by the customer management system (CRM system) into consideration, countermeasures for coverage and interference can be realized automatically with lowering of customer satisfaction being prevented. The following describes exemplary embodiments of the present invention.

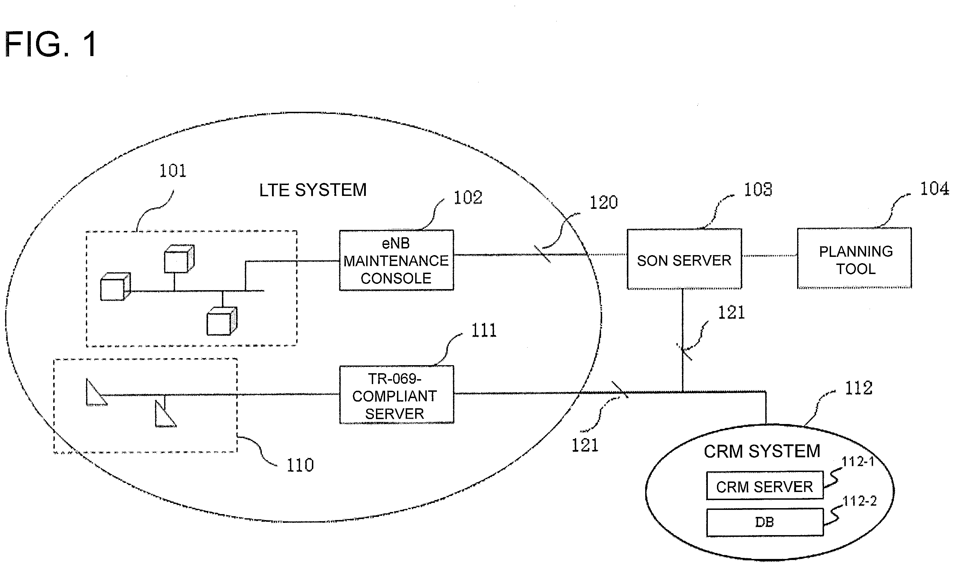

Fig. 1 illustrates a configuration of a system according to an exemplary embodiment of the present invention. Referring to Fig. 1, this system includes:
an LTE base station eNB group 101;
an LTE indoor base station (home base station) HeNB group 110;
an eNB maintenance console 102 that is connected to the base station eNB group 101, monitors the eNBs, and performs failure detection, and maintenance and management thereof;
a SON server 103 that performs autonomously installation and operation management of an LTE network;
a TR-069-compliant server 111 that serves as a maintenance console monitoring the HeNB group 110, to remotely manage the HeNB group 110 and execute maintenance such as monitoring and controlling firmware and the like of the HeNBs;
a CRM system 112, which is a customer management system connected to the SON server 103 and the TR-069-compliant server 111 to manage customers; and
a planning tool 104, which is a tool for supplying basic information on the installation design of an eNB to the SON server 103 (for supplying cartographic information, eNB cost information, and the like for the installation design by the SON server 103).

The TR-069-compliant server 111 is a center supporting CPE WAN Management Protocol (CWMP) standardized by Broadband Forum (where CPE stands for Customer Premises Equipment and WAN stands for Wide Area Network). This TR-069-compliant server 111 serves as a TR069-compliant server remotely managing the HeNB group 110. Reference may be done to a NPL 6 as to details of TR-069.

As described above, an operator needs to manage the HeNB group 110 in consideration of a viewpoint of a customer. The operator needs to manage information about the eNB group 101 from a viewpoint of a public service. Radio parameters set or changed by the SON server 103 are set in target eNBs and HeNBs via the eNB maintenance console 102 and the TR-069-compliant server 111, respectively.

What platform is the CRM system is not directly related to the subject of the present invention. In the present exemplary embodiment, a CRM provided by Salesforce.com Co., Ltd. that can easily import a SOAP (Simple Object Access Protocol) interface and is widely-used, is used as the CRM system. However, the CRM system is not limited to such example.

A communication adapter function for SOAP is implemented in a client portion of the CRM system provided by Salesforce.com Co., Ltd. to realize the SOAP interface.

The TR-069-compliant server 111, the SON server 103, and a server (CRM server) 112-1 of the CRM system 112 are connected to each other for communication via a SOAP interface 121. However, the eNB maintenance console 102 and the SON server 103 are connected to each other via an interface 120. For example, regarding the details of the SOAP interface, reference can be done to NPL 5.

On a screen of a client that is connected for communication to the server (CRM server) 112-1 of the CRM system 112 and the TR069-compliant server 111, it is possible to work with the cooperation of customer information and HeNB information in one screen with the SOAP communication partner.

Customer information which has been a trigger to install a HeNB and HeNB information are stored and managed in the storage device (database) 112-2 in the CRM system 112, with the customer information being associated with the HeNB information.

Among the information managed in the storage device (database 112-2) in the CRM system 112, for example, via the SOAP interface 121, information about:
- new registration and deletion (including new registration of a customer which is a trigger for HeNB installation, deletion of a customer);
- change and the like of HeNB radio parameters; and
- matter affecting eNB installation and radio parameter setting, are notified from the CRM system 112 automatically to the SON server 103.

For example, the SON server 103 executes:
- new installation of an eNB; and
- modification of eNB radio parameters.

In a case wherein the radio environment of an HeNB is changed and it is decided that usability of the HeNB could be affected, the SON server 103 notifies the CRM system 112 of which HeNB is affected (the HeNB whose usability could be affected by change of the radio environment) via the SOAP interface 121.

After the CRM system 112 is notified by the SON server 103 of the relevant HeNB (the HeNB whose usability could be affected by change of the radio environment), the CRM system 112 determines countermeasures for a customer associated with the relevant HeNB, in accordance with customer information such as
- importance of the customer,
- sensitivity about complaints, and so forth.
In this way, according to the present exemplary embodiment, with the interconnection and cooperation of the SON server 103 and the CRM system 112, a meticulous provision per customer can be achieved.

Generally, the setting, change, or the like of HeNB radio parameter is performed, for example, based on complaints of which customers notify an operator (complaints about problems with coverage, interference, and so forth). According to the present exemplary embodiment, matters needed by customers are previously communicated and adjusted between the CRM system 112 and the SON server 103. This can contribute to the improvement of customer satisfaction.

An HeNB and an eNB having a different use each other are managed by different servers suitable for standardization or management, namely, by the SON server 103 and the server of the CRM system 112, and these different servers cooperate each other via the SOAP interface 121. Thus, different business systems share necessary data, and the construction cost (CAPEX) including both systems can be reduced.

According to the present exemplary embodiment, HeNBs can be managed on the CRM system for customer-management. The CRM system can manage HeNBs referring to customer information. Thus, lowering of customer satisfaction caused by mistakes, such as operation errors due to dearth of information or due to lack of contact to necessary customers can be prevented.

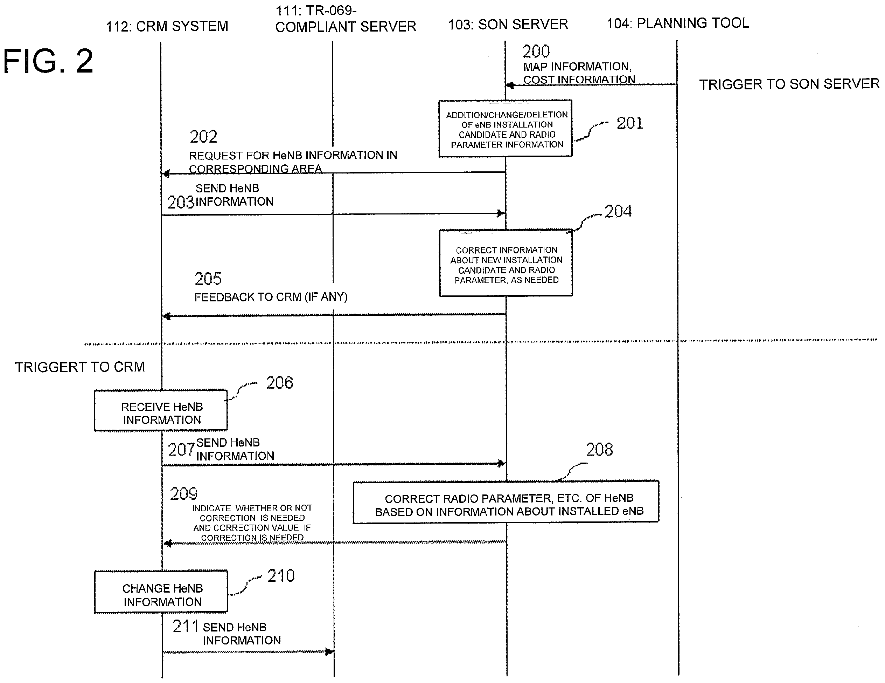

Fig. 2 illustrates operation sequences executed by the CRM server 112, the SON server 103, and the TR-069-compliant server 111 in Fig. 1.

In Fig. 2, map information and cost information such as the price of an eNB is supplied from the planning tool 104 to the SON server 103 in order to determine a deployment candidate and radio parameters of the eNB in the LTE system (200).

Based on the information supplied from the planning tool 104, the SON server 103 determines addition, change, or deletion of the deployment candidate and radio parameter information (201). In this process, to determine whether any HeNB is affected, the SON server 103 requests the CRM system 112 to send information about HeNBs installed in a corresponding area (202).

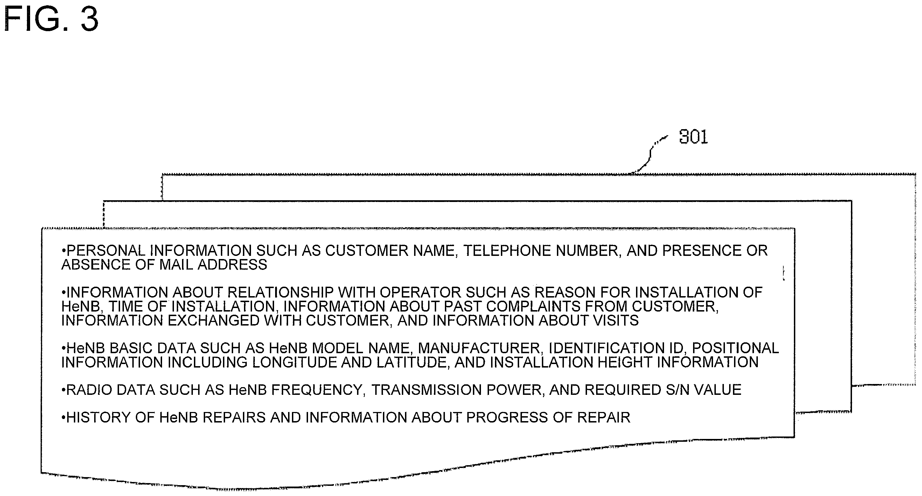

On receipt of the request from the SON server 103, the CRM server 112-1 of the CRM system 112 reads the information about HeNBs installed in the corresponding area from the storage device 112-2 and sends the HeNB information to the SON server 103 (203). In this process, for example, the CRM system 112 may read personal information associated with HeNB information which will be explained with reference to in Fig. 3, from the storage device 112-2 as the HeNB information and send the personal information to the SON server 103.

The SON server 103 receives the HeNB information from the CRM system 112 and determines whether any existing HeNB is affected based on the HeNB information. If an existing HeNB is affected, the eNB deployment candidate or a radio parameter setting content is corrected, so that the HeNB is not affected (204). In this example, since the HeNB has already been installed, basically, the eNB, which is to be installed after the HeNB, is responsible for correction of the installation candidate or the radio parameters setting content. For example, the SON server 103 checks whether installation of the eNB problematically interferes with any existing HeNB cell (femtocell) (intercell interference). If problematic interference is caused, for example, the SON server 103 corrects a radio parameter setting such as the transmission power or antenna tilt angle of the installed eNB and executes reduction (shrinkage) of the coverage (cell size). Namely, the SON server 103 changes settings so that the eNB does not interfere with any existing HeNB. In this process, when the SON server 103 determines whether installation of the eNB problematically interferes with any existing HeNB cell (femtocell), the SON server 103 may examine personal information associated with the HeNB information. For example, if the number or the frequency of past complaints recorded in the personal information exceeds a predetermined value, countermeasures against the interference of the eNB with existing HeNBs may be strengthened. If there is information that needs to be fed back to the CRM system 112 (for example, if there is a change in the HeNB information sent from the CRM system 112), the SON server 103 sends such information to the CRM system 112 (205).

In contrast, if a new HeNB is installed, an existing HeNB is removed, or a radio parameter setting is changed, the CRM system 112 receives HeNB information (206). The CRM system 112 sends the HeNB information to the SON server 103 to cause the SON server 103 to check the HeNB information (207).

The SON server 103 receives the HeNB information from the CRM system 112 and determines an installed eNB in an area corresponding to the installation location of the HeNB among the installed eNBs managed by the SON server 103. The SON server 103 determines how installation of the HeNB affects the eNB in terms of radio interference and determines whether to correct a radio parameter setting content of the HeNB (208). The SON server 103 notifies the CRM system 112 of whether or not a radio parameter of the HeNB needs to be corrected and sends, if a radio parameter of the HeNB needs to be corrected, a correction value to the CRM system 112 (209).

If the correction is needed, the CRM system 112 changes necessary information, among the information managed thereby. For example, the CRM system 112 reviews installation of the HeNB or a radio parameter setting content (210). Namely, the CRM server 112-1 updates the HeNB installation information stored in the storage device 112-2 with the change information. In the CRM system 112, the reviewing of installation of the HeNB or a radio parameter setting needs to be done, obtaining customer' comprehension based on the customer information in the CRM system 112, as needed. Part of this confirmation operation may be carried out automatically. For example, based on mail address information in the customer information, automatically-generated mail by inserting information about a change of installation or a radio parameter setting of HeNB in a fixed phrase (stored in advance) provided for reviewing installation or a radio parameter setting of HeNB, can be automatically sent.

The CRM system 112 sends change of the HeNB information such as a review of installation of the HeNB or a radio parameter setting content to the TR-069-compliant server 111 (211). Based on the HeNB information sent from the CRM system 112, the TR-069-compliant server 111 performs correction of the radio parameter setting of the HeNB or the like.

Fig. 3 illustrates a data record stored and managed by the storage device (DB: database) 112-2 in the CRM system 112. The storage device 112-2 is not limited, as long as the storage device 112-2 can for example store, refer to, and update a data record. Namely, the storage device 112-2 is not limited to a database system. Each data record 301 is provided for each of a plurality of customers. In the data record 301, customer information and HeNB information is managed as a pair. For example, HeNB information can be retrieved by using corresponding customer information as a key, or customer information can be retrieved by using corresponding HeNB information as a key.

In the data record 301, as the customer information, personal information such as a contact address including a name, a telephone number, and presence or absence of a mail address is stored and managed.

As the HeNB information, basic data (used by the SON server 103) and radio data (radio parameter data) is stored and managed. The basic data includes an HeNB model name, manufacture name, identification ID, location information including a longitude and a latitude, an installation height and so forth. The radio data includes an HeNB frequency, transmission power, a required S/N (signal-to-noise ratio) and so forth.

Furthermore, as information indicating a relationship between the HeNB and the customer, the following information is stored and managed:
- a trigger to introduce the HeNB;
- time when the HeNB was installed;
- information about past complaints from the customer (history information about complaints from the customer relating to radio coverage or the like: the number or the frequency of complaints);
- information exchanged with the customer;
- information about visits to the customer, and so forth. That is, the information related with the operator is stored and managed.

In addition, maintenance management information, such as a history of repairs of the HeNB and information about the progress of repair, is stored and managed. The content in Fig. 3 is an example. Needless to say, the present invention is not limited to the content or format shown in Fig. 3.

The CRM system 112 is enabled to input and process these items of information. If necessary, the CRM system 112 may be adapted to be able to correct data in cooperation with the SON server 103 (for example, by referring to information from the SON server 103).

Data (for example, data such as an HeNB radio parameter setting value or correction value) determined on the CRM system 112 is notified to the TR-069-compliant server 111 via the SOAP interface 121 and is then set in the corresponding HeNB via the TR-069-compliant server 111.

According to the present invention, the server connected to the SON server is not limited to the server of the CRM system, nor the TR-069-compliant server. The SON server can cooperates with a server that executes other business operations, as long as the server can exchange information with the SON server by using an SOAP interface. In this case, an automated technique for achieving further reduction in CAPEX can be expected.

Modifications and adjustments of the exemplary embodiments and examples are possible within the scope of the claims.

### EXPLANATIONS OF SYMBOLS

- 101: eNB
- 102: eNB maintenance console
- 103: SON server
- 104: planning tool
- 110: home eNB
- 111: TR-069-compliant server
- 112: CRM system
- 112-1: server
- 112-2: storage device (database)
- 120: interface
- 121: SOAP interface
- 301: data record

## Claims

1. A management system for a mobile communication system, wherein the management system comprises:
a first server (103) that is configured to manage a macrocell base station of the mobile communication system, and perform installation design and radio parameter setting of the macrocell base station;
a customer management system (112) that is configured to store and manage customer information and that is configured to store and manage information on a femtocell/home base station of the mobile communication system in association with the customer information; and
a communication protocol interface (121) that is configured to interconnect the first server (103) and the customer management system (112),
wherein the first server (103) is configured to, in performing installation design and/or radio parameter setting of the macrocell base station, acquire information about the femtocell/home base station located in correspondence with where the macrocell base station is to be installed and the customer information associated with the femtocell/home base station from the customer management system (112) to determine whether correction of installation and/or radio parameter setting of the macrocell base station is needed or not.

2. The management system for a mobile communication system according to claim 1, wherein the management system further comprises:
a second server (111) that is configured to maintain the femtocell/home base station; and
a communication protocol interface that is configured to interconnect the second server (111), the first server (103), and the customer management system (112),
wherein, when the femtocell/home base station is installed/removed or radio parameter setting of the femtocell/home base station is changed, the customer management system (112) is configured to receive information about the femtocell/home base station and send the received information about the femtocell/home base station to the first server (103),
in accordance with an influence on the femtocell/home base station by the macrocell base station already installed corresponding to where the femtocell/home base station is installed, the first server (103) is configured to determine whether correction of installation and/or radio parameter setting of the femtocell/home base station is needed or not, notify the customer management system (112) of whether the correction regarding the femtocell/home base station is needed or not, and send, if the correction is needed, correction value information to the customer management system (112),
if the correction regarding the femtocell/home base station is needed, the customer management system (112) is configured to change information about the femtocell/home base station stored and managed by the customer management system (112), based on the information sent from the first server (103) and send the correction value information about the femtocell/home base station to the second server (111), and
the second server (111) is configured to correct the radio parameter setting of the femtocell/home base station, based on the correction value information.

3. The management system for a mobile communication system according to claim 1 or 2, wherein the customer management system (112) is configured to store and manage
at least one of a cause of installation of the femtocell/home base station, an installation time, and an installation location, and
information about a relationship between a customer and an operator of the mobile communication system, in association with personal information about the customer.

4. The management system for a mobile communication system according to claim 1 or 2, wherein the management system further comprises:
an input means that is configured to input information including map information for installation design of the macrocell base station and cost information about the macrocell base station, the information input via the input means being supplied to the first server (103), and
wherein the first server (103) is configured to perform installation design of the macrocell base station based on the input information.

5. The management system for a mobile communication system according to any one of claims 1 to 4, wherein the first server (103) is configured to connect to the macrocell base station via a maintenance console that is configured to perform monitoring and maintenance of a group of the macrocell base stations in the mobile communication system.

6. The management system for a mobile communication system according to any one of claims 1 to 4, wherein the mobile communication system is an LTE system,
the macrocell base station is an LTE base station eNodeB,
the femtocell/home base station is an LTE home base station Home eNodeB,
the first server (103) is a SON server that is configured to connect to a maintenance console that is configured to monitor a group of the macrocell base stations, and that is configured to perform base station installation design, and to perform autonomous operation and management of an LTE network, and
the communication protocol interface (121) is a SOAP interface.

7. A management method for a mobile communication system, wherein the method comprises:
interconnecting, by a communication protocol interface (121),
a first server (103) that is configured to manage a macrocell base station of the mobile communication system, and to perform installation design and radio parameter setting of the macrocell base station, with
a customer management system (112) that is configured to store and manage customer information and to store and manage information on a femtocell/home base station of the mobile communication system in association with the customer information, to allow the first server (103) and the customer management system (112) to cooperate with each other; and
acquiring, by the first server (103), in performing installation design and/or radio parameter setting of the macrocell base station, information about the femtocell/home base station located in correspondence with where the macrocell base station is to be installed and the customer information associated with the femtocell/home base station, from the customer management system (112), to determine whether correction of installation and/or radio parameter setting of the macrocell base station is needed or not.

8. The management method for a mobile communication system according to claim 7, wherein the method comprises:
interconnecting, by the communication protocol interface (121), a second server (111) that is configured to maintain the femtocell/home base station, with the first server (103), and the customer management system (112), to allow second the second server (111), the first server (103), and the customer management system (112) to cooperate with each other;
when the femtocell/home base station is installed/removed or radio parameter setting of the femtocell/home base station is changed, receiving, by the customer management system (112), information about the femtocell/home base station to send the received information about the femtocell/home base station to the first server (103);
in accordance with an influence on the femtocell/home base station by the macrocell base station already installed corresponding to where the femtocell/home base station is installed,
determining, by the first server (103), whether correction of installation and/or radio parameter setting of the femtocell/home base station is needed or not, notifying, by the first server (103), the customer management system (112) of whether the correction regarding the femtocell/home base station is needed or not, and sending, by the first server (103), if the correction is needed, correction value information to the customer management system (112);
changing, by the customer management system (112), if the correction regarding the femtocell/home base station is needed, information about the femtocell/home base station stored and managed by the customer management system (112), based on the information sent from the first server (103), and sending, by the customer management system (112), the correction value information about the femtocell/home base station to the second server (111); and
correcting, by the second server (111), the radio parameter setting of the femtocell/home base station, based on the correction value information.

9. A first server apparatus (103) configured to manage a macrocell base station of a mobile communication system and to perform installation design and radio parameter setting of the macrocell base station, wherein the first server apparatus is connected for communication, by a communication protocol interface (121), with a customer management system (112) that is configured to store and manage customer information and to store and manage information on a femtocell/home base station of the mobile communication system in association with the customer information, and with a second server (111) apparatus that is configured to maintain the femtocell/home base station, wherein, in performing installation design and/or radio parameter setting of the macrocell base station, the first server apparatus is configured to acquire information about the femtocell/home base station located in correspondence with where the macrocell base station is to be installed and the customer information associated with the femtocell/home base station, from the customer management system (112) to determine whether correction of installation and/or radio parameter setting of the macrocell base station is needed or not, and
wherein, when the femtocell/home base station is installed/removed or radio parameter setting of the femtocell/home base station is changed, the first server apparatus is configured to receive information about the femtocell/home base station from the customer management system (112),
in accordance with an influence on the femtocell/home base station by the macrocell base station already installed corresponding to where the femtocell/home base station is installed, the first server apparatus is configured to determine whether correction of installation and/or radio parameter setting of the femtocell/home base station is needed or not, to notify the customer management system (112) of whether correction regarding the femtocell/home base station is needed or not, and to send, if the correction is needed, correction value information to the customer management system (112).

10. A customer management system (112) the customer management system (112) comprising a server apparatus for customer management system, CRM server (112-1), wherein the CRM server is connected, by a communication protocol interface (121), with a first server (103) that is configured to manage a macrocell base station of a mobile communication system, and to perform installation design and radio parameter setting of the macrocell base station, and with a second server (111) that is configured to maintain a femtocell/home base station of the mobile communication system;
and, the customer management system (112) further comprising a storage device (112-2) that is configured to store and manage customer information and to store and manage information on the femtocell/home base station of the mobile communication system in association with the customer information;
wherein, when the first server (103) performs installation design and/or radio parameter setting of the macrocell base station, the CRM server is configured to acquire information about the femtocell/home base station located in correspondence with where the macrocell base station is to be installed and the customer information associated with the femtocell/home base station from the storage device (112-2), and to send the acquired information to the first server (103),
wherein, when the femtocell/home base station is installed/removed or radio parameter setting of the femtocell/home base station is changed, the CRM server is configured to receive information about the femtocell/home base station, to send the information to the first server (103), and to cause the first server (103) to determine whether correction of installation and/or radio parameter setting of the macrocell base station is needed or not,
wherein the CRM server is notified by the first server (103) of whether correction about the femtocell/home base station is needed, the determination being made based on an influence on the femtocell/home base station by the macrocell base station already installed and, if the correction is needed, the CRM server is configured to receive correction value information from the first server (103), and
wherein, if the correction about the femtocell/home base station is needed, the CRM server is configured to change information about the femtocell/home base station stored and managed in the storage device, to send correction value information about the femtocell/home base station to the second server (111), and to cause the second server (111) to correct the radio parameter setting of the femtocell/home base station.

## Patentansprüche

1. Managementsystem für ein Mobilkommunikationssystem, wobei das Managementsystem aufweist:
einen ersten Server (103), der dafür konfiguriert ist, eine Makrozellen-Basisstation des Mobilkommunikationssystems zu managen und ein Installationsdesign und eine Funkparametereinstellung der Makrozellen-Basisstation auszuführen;
ein Kundenmanagementsystem (112), das dafür konfiguriert ist, Kundeninformation zu speichern, und dafür konfiguriert ist, Information über eine Femtozellen-/Heim-Basisstation des mobilen Kommunikationssystems in Zuordnung zu der Kundeninformation zu speichern und zu managen; und
eine Kommunikationsprotokollschnittstelle (121), die dafür konfiguriert ist, den ersten Server (103) und das Kundenmanagementsystem (112) miteinander zu verbinden,
wobei der erste Server (103) dafür konfiguriert ist, beim Ausführen des Installationsdesigns und/oder der Funkparametereinstellung der Makrozellen-Basisstation Information über die Femtozellen-/Heim-Basisstation, die in Zuordnung mit dem Ort angeordnet ist, wo die Makrozellen-Basisstation installiert werden soll, und die Kundeninformation, die der Femtozellen-/Heim-Basisstation zugeordnet ist, vom Kundenmanagementsystem (112) abzurufen, um zu bestimmen, ob eine Korrektur der Installation und/oder der Funkparametereinstellung der Makrozellen-Basisstation erforderlich ist oder nicht.

2. Managementsystem nach Anspruch 1, wobei das Managementsystem ferner aufweist:
einen zweiten Server (111), der dafür konfiguriert ist, die Femtozellen-/Heim-Basisstation zu warten; und
eine Kommunikationsprotokollschnittstelle, die dafür konfiguriert ist, den zweiten Server (111), den ersten Server (103) und das Kundenmanagementsystem (112) miteinander zu verbinden,
wobei, wenn die Femtozellen-/Heim-Basisstation installiert/entfernt oder die Funkparametereinstellung der Femtozellen-/Heim-Basisstation geändert wird, das Kundenmanagementsystem (112) dafür konfiguriert ist, Information über die Femtozellen-/Heim-Basisstation zu empfangen und die empfangene Information über die Femtozellen-/Heim-Basisstation an den ersten Server (103) zu übertragen,
der erste Server (103) dafür konfiguriert ist, gemäß einem Einfluss auf die Femtozellen-/Heim-Basisstation durch die Makrozellen-Basisstation, die bereits gemäß dem Ort installiert ist, an dem die Femtozellen-/Home-Basisstation installiert ist, zu bestimmen, ob eine Korrektur der Installation und/oder der Funkparametereinstellung der Femtozellen-/Heim-Basisstation erforderlich ist oder nicht, das Kundenmanagementsystem (112) darüber zu benachrichtigen, ob die Korrektur bezüglich der Femtozellen-/Heim-Basisstation erforderlich ist oder nicht, und, falls die Korrektur erforderlich ist, Korrekturwertinformation an das Kundenmanagementsystem (112) zu übertragen,
falls die Korrektur bezüglich der Femtozellen-/Heim-Basisstation erforderlich ist, das Kundenmanagementsystem (112) dafür konfiguriert ist, Information über die Femtozellen-/Heim-Basisstation, die durch das Kundenmanagementsystem (112) gespeichert und gemanagt wird, basierend auf der vom ersten Server (103) übertragenen Information zu ändern und die Korrekturwertinformation über die Femtozellen-/Heim-Basisstation an den zweiten Server (111) zu übertragen, und
der zweite Server (111) dafür konfiguriert ist, die Funkparametereinstellung der Femtozellen-/Heim-Basisstation basierend auf der Korrekturwertinformation zu korrigieren.

3. Managementsystem nach Anspruch 1 oder 2, wobei das Kundenmanagementsystem (112) dafür konfiguriert ist
mindestens einen Parameter unter einem Grund für die Installation der Femtozelle-/Heim-Basisstation, einer Installationszeit und einem Installationsort, und
Information über eine Beziehung zwischen einem Kunden und einem Betreiber des Mobilkommunikationssystems in Zuordnung zu persönlicher Information über den Kunden zu speichern und zu managen.

4. Managementsystem nach Anspruch 1 oder 2, wobei das Managementsystem ferner aufweist:
eine Eingabeeinrichtung, die dafür konfiguriert ist, Eingabeinformation einzugeben, die Planinformation für das Installationsdesign der Makrozellen-Basisstation und Kosteninformation über die Makrozellen-Basisstation enthält, wobei die über die Eingabeeinrichtung eingegebene Information dem ersten Server (103) zugeführt wird, und
wobei der erste Server (103) dafür konfiguriert ist, das Installationsdesign der Makrozellen-Basisstation basierend auf der Eingabeinformation auszuführen.

5. Managementsystem nach einem der Ansprüche 1 bis 4, wobei der erste Server (103) dafür konfiguriert ist, über eine Wartungskonsole, die dafür konfiguriert ist, eine Gruppe der Makrozellen-Basisstationen im Mobilkommunikationssystem zu überwachen und zu warten, mit der Makrozellen-Basisstation verbunden zu werden.

6. Managementsystem nach einem der Ansprüche 1 bis 4, wobei
das Mobilkommunikationssystem ein LTE-System ist,
die Makrozellen-Basisstation ein LTE-Basisstation-eNodeB ist,
die Femtozellen-/Heim-Basisstation ein LTE-Heim-Basisstation-HomeeNodeB ist,
der erste Server (103) ein SON-Server ist, der dafür konfiguriert ist, mit einer Wartungskonsole verbunden zu werden, die dafür konfiguriert ist, eine Gruppe der Makrozellen-Basisstationen zu überwachen, und dafür konfiguriert ist, ein Basisstationsinstallationsdesign auszuführen und einen autonomen Betrieb und ein autonomes Management eines LTE-Netzwerks auszuführen, und
wobei die Kommunikationsprotokollschnittstelle (121) eine SOAP-Schnittstelle ist.

7. Managementverfahren für ein Mobilkommunikationssystem, wobei das Verfahren die Schritte aufweist:
Verbinden eines ersten Servers (103), der dafür konfiguriert ist, eine Makrozellen-Basisstation des Mobilkommunikationssystems zu managen und ein Installationsdesign und eine Funkparametereinstellung der Makrozellen-Basisstation auszuführen, mit einem Kundenmanagementsystem (112), das dafür konfiguriert ist, Kundeninformation zu speichern und zu managen und Information über eine Femtozellen-/Heim-Basisstation des mobilen Kommunikationssystems in Zuordnung zur Kundeninformation zu speichern und zu managen, durch eine Kommunikationsprotokollschnittstelle (121) miteinander, um zu ermöglichen, dass der erste Server (103) und das Kundenmanagementsystem (112) zusammenzuarbeiten; und
Abrufen von Information über die Femtozellen-/Heim-Basisstation, die gemäß dem Ort angeordnet ist, an dem die Makrozellen-Basisstation installiert werden soll, und der der Femtozellen-/Heim-Basisstation zugeordneten Kundeninformation vom Kundenmanagementsystem (112) durch den ersten Server (103) beim Ausführen eines Installationsdesigns und/oder einer Funkparametereinstellung der Makrozellenbasisstation, um zu bestimmen, ob eine Korrektur der Installation und/oder der Funkparametereinstellung der Makrozellen-Basisstation erforderlich ist oder nicht.

8. Managementverfahren nach Anspruch 7, wobei das Verfahren die Schritte aufweist:
Verbinden eines zweiten Servers (111), der dafür konfiguriert ist, die Femtozellen-/Heim-Basisstation zu warten, mit dem ersten Server (103) und dem Kundenmanagementsystem (112) durch die Kommunikationsprotokollschnittstelle (121), um zu ermöglichen, dass der zweite Server (111), der erste Server (103) und das Kundenmanagementsystem (112) zusammenarbeiten;
wenn die Femtozellen-/Heim-Basisstation installiert/entfernt wird oder die Funkparametereinstellung der Femtozellen-/Heim-Basisstation geändert wird: Empfangen von Information über die Femtozellen-/Heim-Basisstation durch das Kundenmanagementsystem (112), um die empfangene Information über die Femtozellen-/Heim-Basisstation an den ersten Server (103) zu übertragen;
Bestimmen durch den ersten Server (103) gemäß einem Einfluss auf die Femtozellen-/Heim-Basisstation durch die Makrozellen-Basisstation, die bereits gemäß dem Ort installiert ist, an dem die Femtozellen-/Heim-Basisstation installiert ist, ob eine Korrektur der Installation und/oder der Funkparametereinstellung der Femtozellen-/Heim-Basisstation erforderlich ist oder nicht;
Informieren des Kundenmanagementsystem (112) durch den ersten Server (103) darüber, ob die Korrektur bezüglich der Femtozellen-/Heim-Basisstation erforderlich oder nicht, und Übertragen von Korrekturwertinformation an das Kundenmanagementsystem (112) durch den ersten Server (103), falls die Korrektur erforderlich ist;
Ändern von Information über die Femtozellen-/Heim-Basisstation, die durch das Kundenmanagementsystem (112) gespeichert und gemanagt wird, durch das Kundenmanagementsystem (112), wenn die Korrektur bezüglich der Femtozellen-/Heim-Basisstation erforderlich ist, basierend auf der vom ersten Server (103) übertragenen Information und Übertragen der Korrekturwertinformation über die Femtozellen-/Heim-Basisstation an den zweiten Server (111) durch das Kundenmanagementsystem (112); und
Korrigieren der Funkparametereinstellung der Femtozellen-/Heim-Basisstation durch den zweiten Server (111) basierend auf der Korrekturwertinformation.

9. Erste Servervorrichtung (103), die dafür konfiguriert ist, eine Makrozellen-Basisstation eines Mobilkommunikationssystems zu managen und ein Installationsdesign und eine Funkparametereinstellung der Makrozellen-Basisstation auszuführen, wobei die erste Servervorrichtung für eine Kommunikation durch eine Kommunikationsprotokollschnittstelle (121) mit einem Kundenmanagementsystem (112) verbunden ist, das dafür konfiguriert ist, Kundeninformationen zu speichern und zu managen und Information über eine Femtozellen-/Heim-Basisstation des Mobilkommunikationssystems in Zuordnung zur Kundeninformation zu speichern und zu managen, und mit einer zweiten Servervorrichtung (111), die dafür konfiguriert ist, die Femtozellen-/Heim-Basisstation zu warten,
wobei beim Ausführen des Installationsdesigns und/oder der Funkparametereinstellung der Makrozellen-Basisstation die erste Servervorrichtung dafür konfiguriert ist, Information über die Femtozellen-/Heim-Basisstation, die gemäß dem Ort angeordnet ist, an dem die Makrozellen-Basisstation installiert werden soll, und die Kundeninformation, die der Femtozellen-/Heim-Basisstation zugeordnet ist, vom Kundenmanagementsystem (112) abzurufen, um zu bestimmen, ob eine Korrektur der Installation und/oder Funkparametereinstellung der Makrozellen-Basisstation erforderlich ist oder nicht, und
wobei, wenn die Femtozellen-/Heim-Basisstation installiert/entfernt wird oder die Funkparametereinstellung der Femtozellen-/Heim-Basisstation geändert wird, die erste Servervorrichtung dafür konfiguriert ist, Information über die Femtozellen-/Heim-Basisstation vom Kundenmanagementsystem (112) zu empfangen,
die erste Servervorrichtung dafür konfiguriert ist, gemäß einem Einfluss auf die Femtozellen-/Heim-Basisstation durch die Makrozellen-Basisstation, die bereits gemäß dem Ort installiert ist, an dem die Femtozellen-/Heim-Basisstation installiert ist, zu bestimmen, ob eine Korrektur der Installation und/oder der Funkparametereinstellung der Femtozellen-/Heim-Basisstation erforderlich ist oder nicht, um das Kundenmanagementsystem (112) darüber zu informieren, ob eine Korrektur bezüglich der Femtozellen-/Heim-Basisstation erforderlich ist oder nicht, und, wenn die Korrektur erforderlich ist, Korrekturwertinformation an das Kundenmanagementsystem (112) zu übertragen.

10. Kundenmanagementsystem (112), wobei das Kundenmanagementsystem (112) eine Servervorrichtung für ein Kundenmanagementsystem, CRM-Server (112-1), aufweist, wobei der CRM-Server über eine Kommunikationsprotokollschnittstelle (121) mit einem ersten Server (103) verbunden ist, der dafür konfiguriert ist, eine Makrozellen-Basisstation eines Mobilkommunikationssystems zu managen und ein Installationsdesign und eine Funkparametereinstellung der Makrozellen-Basisstation auszuführen, und mit einem zweiten Server (111), der dafür konfiguriert ist, eine Femtozellen-/Heim-Basisstation des mobilen Kommunikationssystems zu warten,
wobei das Kundenmanagementsystem (112) ferner eine Speichereinrichtung (112-2) aufweist, die dafür konfiguriert ist, Kundeninformation zu speichern und zu managen und Information über die Femtozellen-/Heim-Basisstation des Mobilkommunikationssystems in Zuordnung zur Kundeninformation zu speichern und zu managen,
wobei, wenn der erste Server (103) ein Installationsdesign und/oder eine Funkparametereinstellung der Makrozellen-Basisstation ausführt, der CRM-Server dafür konfiguriert ist, Information über die Femtozellen-/Heim-Basisstation, die gemäß dem Ort angeordnet ist, an dem die Makrozellen-Basisstation installiert werden soll, und die Kundeninformation, die der Femtozellen-/Heim-Basisstation zugeordnet ist, von der Speichereinrichtung (112-2) abzurufen und die abgerufene Information an den ersten Server (103) zu übertragen,
wobei, wenn die Femtozellen-/Heim-Basisstation installiert/entfernt wird oder eine Funkparametereinstellung der Femtozellen-/Heim-Basisstation geändert wird, der CRM-Server dafür konfiguriert ist, Information über die Femtozellen-/Heim-Basisstation zu empfangen, die Information an den ersten Server (103) zu übertragen und zu veranlassen, dass der erste Server (103) bestimmt, ob eine Korrektur der Installation und/oder der Funkparametereinstellung der Makrozellen-Basisstation erforderlich ist oder nicht,
wobei der CRM-Server durch den ersten Server (103) darüber informiert wird, ob eine Korrektur bezüglich der Femtozellen-/Heim-Basisstation erforderlich ist, wobei die Bestimmung basierend auf einem Einfluss auf die Femtozellen-/Heim-Basisstation durch die bereits installierte Makrozellen-Basisstation erfolgt, und wobei, wenn die Korrektur erforderlich ist, der CRM-Server dafür konfiguriert ist, Korrekturwertinformation vom ersten Server (103) zu empfangen, und
wobei, wenn die Korrektur bezüglich der Femtozellen-/Heim-Basisstation erforderlich ist, der CRM-Server dafür konfiguriert ist, Information über die Femtozellen-/Heim-Basisstation, die in der Speichereinrichtung gespeichert und gemanagt wird, zu ändern, Korrekturwertinformation über die Femtozellen-/Heim-Basisstation an den zweiten Server (111) zu übertragen, und zu veranlassen, dass der zweite Server (111) die Funkparametereinstellung der Femtozellen-/Heim-Basisstation korrigiert.

## Revendications

1. Système de gestion pour un système de communication mobile, dans lequel le système de gestion comprend :
un premier serveur (103) qui est configuré pour gérer une station de base macrocellulaire du système de communication mobile, et mettre en oeuvre une conception d'installation et une définition de paramètres radio de la station de base macrocellulaire ;
un système de gestion de client (112) qui est configuré pour stocker et gérer des informations de client et qui est configuré pour stocker et gérer des informations connexes à une station de base femtocellulaire/domestique du système de communication mobile en association avec les informations de client ; et
une interface de protocole de communication (121) qui est configurée pour interconnecter le premier serveur (103) et le système de gestion de client (112),
dans lequel le premier serveur (103) est configuré pour, dans le cadre de la mise en oeuvre de la conception d'installation et/ou de la définition de paramètres radio de la station de base macrocellulaire, acquérir des informations connexes à la station de base femtocellulaire/domestique située en correspondance avec l'endroit où la station de base macrocellulaire doit être installée, et des informations de client associées à la station de base femtocellulaire/domestique, auprès du système de gestion de client (112), en vue de déterminer si une correction d'installation et/ou de définition de paramètres radio de la station de base macrocellulaire est requise ou non.

2. Système de gestion pour un système de communication mobile selon la revendication 1, dans lequel le système de gestion comprend, en outre :
un deuxième serveur (111) qui est configuré pour maintenir la station de base femtocellulaire/domestique ; et
une interface de protocole de communication qui est configurée pour interconnecter le deuxième serveur (111), le premier serveur (103), et le système de gestion de client (112),
dans lequel, lorsque la station de base femtocellulaire/domestique est installée/supprimée, ou la définition de paramètres radio de la station de base femtocellulaire/domestique est modifiée, le système de gestion de client (112) est configuré pour recevoir des informations connexes à la station de base femtocellulaire/domestique, et envoyer les informations reçues connexes à la station de base femtocellulaire/domestique au premier serveur (103),
conformément à une influence sur la station de base femtocellulaire/domestique exercée par la station de base macrocellulaire déjà installée en correspondance avec l'endroit où la station de base femtocellulaire/domestique est installée, le premier serveur (103) est configuré pour déterminer si une correction d'installation et/ou de définition de paramètres radio de la station de base femtocellulaire/domestique est requise ou non, notifier, au système de gestion de client (112), si la correction concernant la station de base femtocellulaire/domestique est requise ou non, et envoyer, si la correction est requise, des informations de valeur de correction, au système de gestion de client (112),
si la correction concernant la station de base femtocellulaire/domestique est requise, le système de gestion de client (112) est configuré pour modifier des informations connexes à la station de base femtocellulaire/domestique stockées et gérées par le système de gestion de client (112), sur la base des informations envoyées par le premier serveur (103), et à envoyer les informations de valeur de correction connexes à la station de base femtocellulaire/domestique au deuxième serveur (111), et
le deuxième serveur (111) est configuré pour corriger la définition de paramètres radio de la station de base femtocellulaire/domestique, sur la base des informations de valeur de correction.

3. Système de gestion pour un système de communication mobile selon la revendication 1 ou 2, dans lequel le système de gestion de client (112) est configuré pour stocker et gérer :
au moins l'un parmi une cause d'installation de la station de base femtocellulaire/domestique, un temps d'installation et un emplacement d'installation, et
des informations concernant une relation entre un client et un opérateur du système de communication mobile, en association avec des informations personnelles concernant le client.

4. Système de gestion pour un système de communication mobile selon la revendication 1 ou 2, dans lequel le système de gestion comprend, en outre :
un moyen d'entrée qui est configuré pour entrer des informations comprenant des informations cartographiques pour la conception d'installation de la station de base macrocellulaire et des informations de coût concernant la station de base macrocellulaire, les informations entrées par l'intermédiaire du moyen d'entrée étant fournies au premier serveur (103), et
dans lequel le premier serveur (103) est configuré pour mettre en oeuvre la conception d'installation de la station de base macrocellulaire sur la base des informations entrées.

5. Système de gestion pour un système de communication mobile selon l'une quelconque des revendications 1 à 4, dans lequel le premier serveur (103) est configuré pour se connecter à la station de base macrocellulaire par l'intermédiaire d'une console de maintenance qui est configurée pour mettre en oeuvre la surveillance et la maintenance d'un groupe des stations de base macrocellulaires dans le système de communication mobile.

6. Système de gestion pour un système de communication mobile selon l'une quelconque des revendications 1 à 4, dans lequel le système de communication mobile est un système de technologie d'évolution à long terme, LTE,
la station de base macrocellulaire est une station « eNodeB » de station de base LTE,
la station de base femtocellulaire/domestique est une station « eNodeB » domestique de station de base domestique LTE,
le premier serveur (103) est un serveur de réseau à auto-organisation, SON, qui est configuré pour se connecter à une console de maintenance qui est configurée pour surveiller un groupe des stations de base macrocellulaires, et qui est configurée pour mettre en oeuvre une conception d'installation de station de base, et pour mettre en oeuvre un fonctionnement et une gestion autonomes d'un réseau LTE, et
l'interface de protocole de communication (121) est une interface de protocole SOAP.

7. Procédé de gestion pour un système de communication mobile, dans lequel le procédé comprend :
interconnecter, par le biais d'une interface de protocole de communication (121), un premier serveur (103) qui est configuré pour gérer une station de base macrocellulaire du système de communication mobile, et mettre en oeuvre une conception d'installation et une définition de paramètres radio de la station de base macrocellulaire, avec un système de gestion de client (112) qui est configuré pour stocker et gérer des informations de client, et pour stocker et gérer des informations connexes à une station de base femtocellulaire/domestique du système de communication mobile en association avec les informations de client, pour permettre au premier serveur (103) et au système de gestion de client (112) de coopérer l'un et l'autre ; et
acquérir, par le biais du premier serveur (103), dans le cadre de la mise en oeuvre de la conception d'installation et/ou de la définition de paramètres radio de la station de base macrocellulaire, des informations connexes à la station de base femtocellulaire/domestique située en correspondance avec l'endroit où la station de base macrocellulaire doit être installée, et les informations de client associées à la station de base femtocellulaire/domestique, auprès du système de gestion de client (112), pour déterminer si une correction d'installation et/ou de définition de paramètres radio de la station de base macrocellulaire est requise ou non.

8. Procédé de gestion pour un système de communication mobile selon la revendication 7, dans lequel le procédé comprend :
interconnecter, par le biais de l'interface de protocole de communication (121), un deuxième serveur (111) qui est configuré pour maintenir la station de base femtocellulaire/domestique, avec le premier serveur (103), et le système de gestion de client (112), afin de permettre au deuxième serveur (111), au premier serveur (103) et au système de gestion de client (112), de coopérer entre eux ;
lorsque la station de base femtocellulaire/domestique est installée/supprimée ou lorsque la définition de paramètres radio de la station de base femtocellulaire/domestique est modifiée, recevoir, par le biais du système de gestion de client (112), des informations connexes à la station de base femtocellulaire/domestique, pour envoyer les informations reçues connexes à la station de base femtocellulaire/domestique au premier serveur (103) ;
conformément à une influence sur la station de base femtocellulaire/domestique exercée par la station de base macrocellulaire déjà installée en correspondance avec l'endroit où la station de base femtocellulaire/domestique est installée, déterminer, par le biais du premier serveur (103), si une correction d'installation et/ou de définition de paramètres radio de la station de base femtocellulaire/domestique est requise ou non, notifier, par le biais du premier serveur (103), au système de gestion de client (112), si la correction concernant la station de base femtocellulaire/domestique est requise ou non, et envoyer, par le biais du premier serveur (103), si la correction est requise, des informations de valeur de correction, au système de gestion de client (112) ;
modifier, par le biais du système de gestion de client (112), si la correction concernant la station de base femtocellulaire/domestique est requise, des informations connexes à la station de base femtocellulaire/domestique stockées et gérées par le système de gestion de client (112), sur la base des informations envoyées par le premier serveur (103), et envoyer, par le biais du système de gestion de client (112), les informations de valeur de correction connexes à la station de base femtocellulaire/domestique, au deuxième serveur (111) ; et
corriger, par le biais du deuxième serveur (111), la définition de paramètres radio de la station de base femtocellulaire/domestique, sur la base des informations de valeur de correction.

9. Premier appareil serveur (103) configuré pour gérer une station de base macrocellulaire d'un système de communication mobile et pour mettre en oeuvre une conception d'installation et une définition de paramètres radio de la station de base macrocellulaire, dans lequel le premier appareil serveur est connecté à des fins de communication, par une interface de protocole de communication (121), avec un système de gestion de client (112) qui est configuré pour stocker et gérer des informations de client et pour stocker et gérer des informations connexes à une station de base femtocellulaire/domestique du système de communication mobile en association avec les informations de client, et avec un deuxième appareil serveur (111) qui est configuré pour maintenir la station de base femtocellulaire/domestique, dans lequel, dans le cadre de la mise en oeuvre de la conception d'installation et/ou de la définition de paramètres radio de la station de base macrocellulaire, le premier appareil serveur est configuré pour acquérir des informations connexes à la station de base femtocellulaire/domestique située en correspondance avec l'endroit où la station de base macrocellulaire doit être installée, et les informations de client associées à la station de base femtocellulaire/domestique, auprès du système de gestion de client (112), en vue de déterminer si une correction d'installation et/ou de définition de paramètres radio de la station de base macrocellulaire est requise ou non, et
dans lequel, lorsque la station de base femtocellulaire/domestique est installée/supprimée, ou lorsque la définition de paramètres radio de la station de base femtocellulaire/domestique est modifiée, le premier appareil serveur est configuré pour recevoir des informations connexes à la station de base femtocellulaire/domestique en provenance du système de gestion de client (112),
conformément à une influence sur la station de base femtocellulaire/domestique exercée par la station de base macrocellulaire déjà installée en correspondance avec l'endroit où la station de base femtocellulaire/domestique est installée, le premier appareil serveur est configuré pour déterminer si une correction d'installation et/ou de définition de paramètres radio de la station de base femtocellulaire/domestique est requise ou non, pour notifier, au système de gestion de client (112), si la correction concernant la station de base femtocellulaire/domestique est requise ou non, et pour envoyer, si la correction est requise, des informations de valeur de correction, au système de gestion de client (112).

10. Système de gestion de client (112), le système de gestion de client (112) comprenant un appareil serveur pour système de gestion de client, et un serveur de gestion de la relation client, CRM, (112-1), dans lequel le serveur CRM est connecté, par le biais d'une interface de protocole de communication (121), à un premier serveur (103) qui est configuré pour gérer une station de base macrocellulaire d'un système de communication mobile, et pour mettre en oeuvre une conception d'installation et une définition de paramètres radio de la station de base macrocellulaire, et à un deuxième serveur (111) qui est configuré pour maintenir une station de base femtocellulaire/domestique du système de communication mobile ; et,
dans lequel le système de gestion de client (112) comprend, en outre, un dispositif de stockage (112-2) qui est configuré pour stocker et gérer des informations de client, et pour stocker et gérer des informations connexes à la station de base femtocellulaire/domestique du système de communication mobile en association avec les informations de client ;
dans lequel, lorsque le premier serveur (103) met en oeuvre la conception d'installation et/ou la définition de paramètres radio de la station de base macrocellulaire, le serveur CRM est configuré pour acquérir des informations connexes à la station de base femtocellulaire/domestique située en correspondance avec l'endroit où la station de base macrocellulaire doit être installée, et les informations de client associées à la station de base femtocellulaire/domestique, auprès du dispositif de stockage (112-2), et pour envoyer les informations acquises au premier serveur (103),
dans lequel, lorsque la station de base femtocellulaire/domestique est installée/supprimée, ou lorsque la définition de paramètres radio de la station de base femtocellulaire/domestique est modifiée, le serveur CRM est configuré pour recevoir des informations connexes à la station de base femtocellulaire/domestique, pour envoyer les informations au premier serveur (103), et pour amener le premier serveur (103) à déterminer si la correction d'installation et/ou de définition de paramètres radio de la station de base macrocellulaire est requise ou non,
dans lequel il est notifié, au serveur CRM, par le biais du premier serveur (103), si la correction concernant la station de base femtocellulaire/domestique est nécessaire, la détermination étant effectuée sur la base d'une influence sur la station de base femtocellulaire/domestique exercée par la station de base macrocellulaire déjà installée et, si la correction est requise, le serveur CRM est configuré pour recevoir des informations de valeur de correction en provenance du premier serveur (103), et
dans lequel, si la correction concernant la station de base femtocellulaire/domestique est requise, le serveur CRM est configuré pour modifier des informations concernant la station de base femtocellulaire/domestique stockées et gérées dans le dispositif de stockage, pour envoyer des informations de valeur de correction connexes à la station de base femtocellulaire/domestique, au deuxième serveur (111), et pour amener le deuxième serveur (111) à corriger la définition de paramètres radio de la station de base femtocellulaire/domestique.
